# EUROPEAN PATENT APPLICATION

(11) **EP 4 585 841 A1**
(43) Date of publication of application: **16.07.2025**
(21) Application number: 24207239.5
(22) Date of filing: 17.10.2024
(51) Int. Cl.: F16L 37/133, F16L 27/12, F16L 37/098, F16L 41/02, H01M 10/613, H01M 10/6557, H01M 10/6567, H01M 50/249

(54) **PIPE CONNECTION STRUCTURE, THERMAL MANAGEMENT ASSEMBLY AND BATTERY PACK**

(30) Priority: 10.01.2024 CN 202420064337 U; 10.01.2024 CN 202410039571; 28.05.2024 WO PCT/CN2024/095782
(71) Applicant: Eve Energy Co., Ltd., Huizhou, Guangdong 516006 (CN)
(72) Inventor: ZHAO, Yuhang, Huizhou, Guangdong 516006 (CN); HUANG, Liansheng, Huizhou, Guangdong 516006 (CN); ZHOU, Xiao, Huizhou, Guangdong 516006 (CN); TANG, Jing, Huizhou, Guangdong 516006 (CN)
(74) Representative: Murgitroyd & Company

(57) **Abstract**

A pipe connection structure includes a first pipe joint (111), a second pipe joint (112) and a limiting structure (113); the second pipe joint (112) and the first pipe joint (111) are connected through insertion, an outer surface of the second pipe joint (112) is provided with a first fitting structure (1121), an end of the limiting structure (113) is connected to the first pipe joint (111), and another end is provided with a second fitting structure (1131); in a direction of the insertion, the second fitting structure (1131) and the first fitting structure (1121) are fitted to block each other, and the second fitting structure (1131) and the first fitting structure (1121) are fitted with a clearance.

## Description

### TECHNICAL FIELD

The present application relates to the field of batteries, and in particular to a pipe connection structure, a thermal management assembly and a battery pack.

### BACKGROUND

In related art, a battery pack includes a battery box, and a battery module and a thermal management assembly both disposed in the battery box. The thermal management assembly includes a pipe component and a thermal management component thermally coupled to battery cells. The thermal management component is provided therein with a plurality of flow channels for the circulation of the heat exchange medium. The pipe component include a liquid inlet pipe and a liquid outlet pipe. The liquid inlet pipe is connected to the liquid inlet ports of the flow channels, and the liquid outlet pipe is connected to the liquid outlet ports of the flow channels. The heat exchange medium is transported from the liquid inlet pipe to the flow channels for heat exchange with the battery cells. The heat exchange medium flows from the liquid outlet port of each flow channel to the liquid outlet pipe, and flows into the liquid inlet pipe after being cooled or heated by a temperature adjustment module. This cycle repeats, and thus the temperature management of the battery cells is achieved and the battery cells are kept within the normal operating temperature range.

### SUMMARY OF THE INVENTION

The relatively high accuracy requirements on the assembly of the existing pipe component and the thermal management assembly leads to difficulties in the design of connection between the thermal management assembly and the pipe component, which is less reliable.

In a first aspect, an embodiments of the present application provides a pipe connection structure. The pipe connection structure includes a first pipe joint, a second pipe joint and a limiting structure; the second pipe joint has a first end, and the first end and an end of the first pipe joint are connected through insertion, and an outer surface of the second pipe joint is provided with a first fitting structure; an end of the limiting structure is connected to an outer surface of the first pipe joint, and another end is provided with a second fitting structure; in a direction of the insertion, the second fitting structure and the first fitting structure are fitted to block each other, and the second fitting structure and the first fitting structure are fitted with a clearance.

In a second aspect, an embodiment of the present application provides a thermal management assembly including a first main pipe, a second main pipe, a thermal management component and a plurality of the pipe connection structures described above; the thermal management component is provided with one or more flow channels configured for circulation of a heat exchange medium, an inlet and an outlet of each flow channel are a first port and a second port, respectively; an end of the first main pipe is in communication with the first port of each flow channel through one of the pipe connection structures, and an end of the second main pipe is in communication with the second port of each flow channel through another one of the pipe connection structures.

In a third aspect, an embodiment of the present application provides a battery pack. The battery pack includes one or more battery modules each including a module box, a plurality of battery cells, and the aforementioned thermal management component. The module box has an installation cavity, the plurality of battery cells are arranged in the installation cavity, the thermal management component is arranged in the installation cavity and thermally coupled to the plurality of battery cells.

### BENEFITS

The second fitting structure and the first fitting structure are fitted with a clearance in the present application, and thus the first pipe joint and the second pipe joint may move towards or away from each other. Therefore, the assembly tolerance of the relevant pipe assembly using the pipe connection structure may be absorbed or compensated for by the clearance, which may reduce the assembly accuracy requirements for the relevant pipe assembly.

### BRIEF DESCRIPTION OF THE DRAWINGS

FIG. 1 is a schematic structural diagram of a pipe connection structure provided in an embodiment of the present application;
FIG. 2 is a schematic structural diagram of a second pipe joint provided in an embodiment of the present application;
FIG. 3 is a schematic structural diagram of a first pipe joint provided in an embodiment of the present application;
FIG. 4 is a side view of a pipe connection structure provided in an embodiment of the present application;
FIG. 5 is a cross-sectional view along the line A-A in FIG. 4;
FIG. 6 is a schematic structural diagram showing the cooperation between a second pipe joint and a first pipe joint provided in an embodiment of the present application;
FIG. 7 is an enlarged view of the region B in FIG. 2;
FIG. 8 is a structural schematic diagram showing the connection between a limiting structure and a second boss provided in an embodiment of the present application;
FIG. 9 is a schematic structural diagram of a thermal management assembly provided in an embodiment of the present application;
FIG. 10 is an enlarged view of the region C in FIG. 9;
FIG. 11 is a partial schematic structural diagram of a flow channel provided in an embodiment of the present application;
FIG. 12 is a schematic structural diagram of a thermal management plate provided in an embodiment of the present application;
FIG. 13 is a schematic structural diagram of a first end plate provided in an embodiment of the present application;
FIG. 14 is a top view of a thermal management plate provided in an embodiment of the present application;
FIG. 15 is a cross-sectional view along the line D-D in FIG. 14;
FIG. 16 is an enlarged view of the region E in FIG. 15;
FIG. 17 is a schematic structural diagram of a battery pack provided in an embodiment of the present application; and
FIG. 18 is a schematic structural diagram of another battery pack provided in an embodiment of the present application.

### Explanation of the reference signs:

001. thermal management assembly; 011. pipe connection structure; 111. first pipe joint; 1111. mounting groove;

112. second pipe joint; 1121. first fitting structure; 11211. first conical surface; 1122. first end surface; 1123. avoidance groove; 113. limiting structure; 1131. second fitting structure; 11311. first side wall; 113111. second conical surface; 1132. first surface; 1133. first section; 1134. bending portion; 1135. second section; 114. sealing ring; 012. first main pipe; 013. second main pipe; 014. thermal management component; 141. first port; 142. second port; 143. flow channel body; 1431. liquid inlet channel; 1432. liquid outlet channel; 144. intercepting structure; 145. thermal management plate; 1451. plate body; 14511. intercepting wall; 1452. first end plate; 14521. first slot; 14512. spacing plate; 002. battery pack; 021. module box.

### EMBODIMENTS OF THE INVENTION

The specific implementations of the present application will be described below with reference to the accompanying drawings.

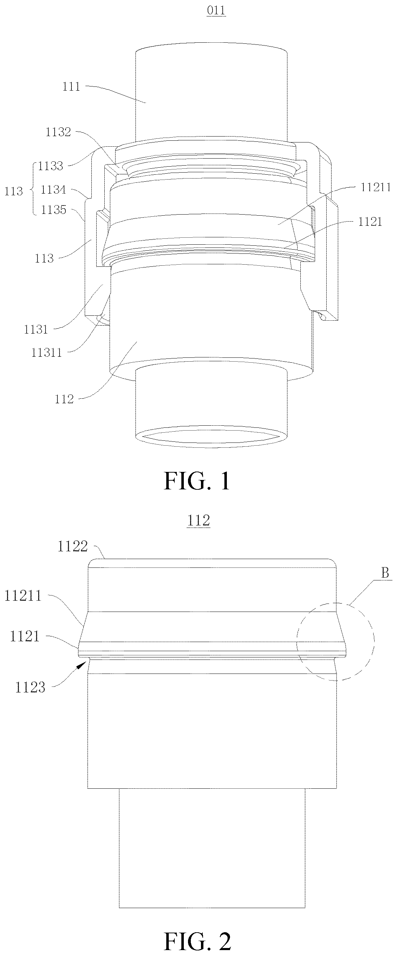

Referring to FIG. 1, FIG. 1 is a schematic structural diagram of a pipe connection structure 011 provided in an embodiment of the present application. The embodiment of the present application provides a pipe connection structure 011. The pipe connection structure 011 includes a first pipe joint 111, a second pipe joint 112 and a limiting structure 113. The second pipe joint 112 has a first end, and the first end and an end of the first pipe joint 111 are connected through insertion. An outer surface of the second pipe joint 112 is provided with a first fitting structure 1121. An end of the limiting structure 113 is connected to an outer surface of the first pipe joint 111, and the other end of the limiting structure 113 is provided with a second fitting structure 1131. In a direction of the insertion, the second fitting structure 1131 and the first fitting structure 1121 are fitted to block each other, and in the direction of insertion, the second fitting structure 1131 and the first fitting structure 1121 are fitted with a clearance.

It will be understood that, the second fitting structure 1131 and the first fitting structure 1121 being fitted with the clearance means that, after the first pipe joint 111 and the second pipe joint 112 are connected through insertion, the first pipe joint 111 may move within the clearance range along the direction of insertion relative to the second pipe joint 112.

The first end and the end of the first pipe joint 111 being connected through insertion may be that, the first end is inserted into the inner hole of the first pipe joint 111, or the end of the first pipe joint 111 is insert into the inner hole of the second pipe joint 112.

In addition, the second fitting structure 1131 and the first fitting structure 1121 being fitted to block each other may be that, one of the fitting structures is a groove and the other one is a protrusion, the protrusion is at least partially located in the groove and they are fitted with a clearance in the direction of insertion. The protrusion is blocked due to the restriction of the wall of the groove and thus the protrusion and the groove block each other in the direction of insertion. For example, the first fitting structure 1121 is a groove provided at the outer surface of the second pipe joint 112, and the second fitting structure 1131 is the protrusion provided at the other end of the limiting structure 113. The protrusion is inserted into the groove, and thus the movement of the protrusion is limited by the walls on both sides of the groove in the direction of insertion. As a result, the first fitting structure 1121 and the second fitting structure 1131 are fitted to block each other. In the direction of insertion, the dimension of the protrusion is less than the dimension of the groove, and thus the second fitting structure 1131 and the first fitting structure 1121 are fitted with the clearance.

The second fitting structure 1131 and the first fitting structure 1121 being fitted to block each other may also be that, the second fitting structure 1131 and the first fitting structure 1121 both are bumps, and the second fitting structure 1131 is located at a side of the first fitting structure 1121 away from the connection between the limiting structure 113 and the first pipe joint 111, so that when the first pipe joint 111 and the second pipe joint 112 move away from each other, the first fitting structure 1121 limits the second fitting structure 1131, and when the first pipe joint 111 and the second pipe joints 112 move towards each other, the limiting structure 113 limits the second pipe joint 112. Thereby, the second fitting structure 1131 and the first fitting structure 1121 are fitted to block each other in the direction of insertion.

For example, the limiting structure 113 is a claw, an end of the claw is connected to the outer surface of the first pipe joint 111, and another end is provided with the second fitting structure 1131. The claw is used to connect the first pipe joint 111 and the second pipe joint 112, which may achieve a quick connection of the pipes in the insertion manner, thereby improving the connection efficiency of the relevant pipe assembly.

In the embodiment, the second fitting structure 1131 and the first fitting structure 1121 are fitted with the clearance, and thus the first pipe joint 111 and the second pipe joint 112 may move towards or away from each other. As a result, the assembly tolerance of the relevant pipe assembly using the pipe connection structure 011 may be absorbed or compensated for by the clearance, which may reduce the assembly accuracy requirements for the relevant pipe assembly. Therefore, the pipe connection of the relevant pipe assembly is relatively simple, and the reliability of the relevant pipe assembly may be improved.

Relevant pipe assembly includes but is not limited to a thermal management assembly.

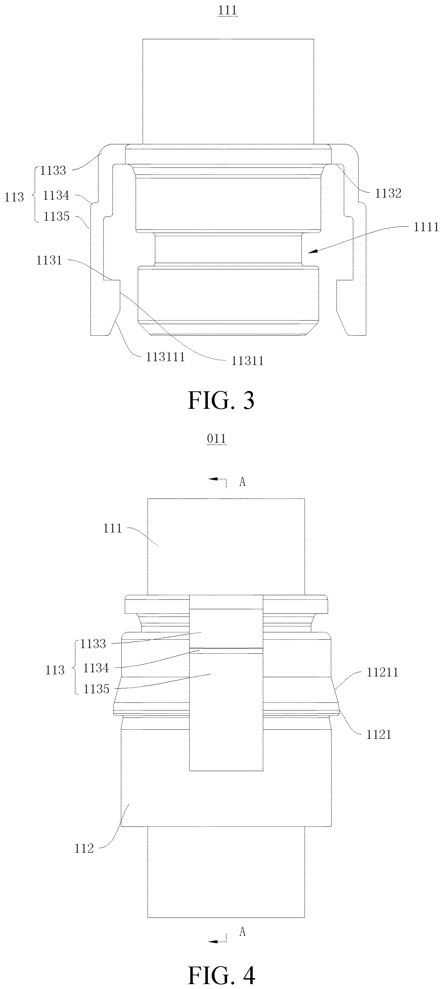

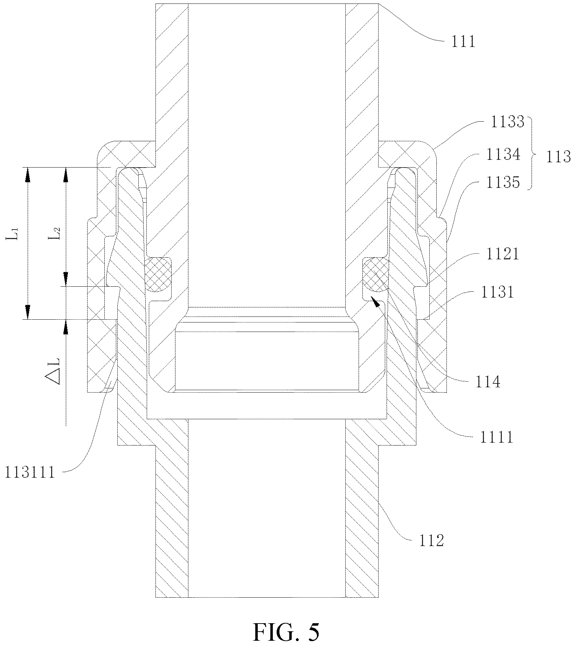

Referring to FIGS. 2 to 5, in an embodiment, the first fitting structure 1121 is a first boss, as shown in FIG. 2 which is a schematic structural diagram of the second pipe joint 112 provided in the embodiment of the present application. The second fitting structure 1131 is a second boss, as shown in FIG. 3 which is a schematic structural diagram of the first pipe joint 111 provided in the embodiment of the present application. The second boss is located at a side of the first boss away from the first end, as shown in FIG. 4 which is a side view of the pipe connection structure 011 provided in the embodiment of the present application. The end of the second pipe joint 112 connected to the first pipe joint 111 is the first end, the second pipe joint 112 has a first end surface 1122 located at the first end, and the limiting structure 113 has a first surface 1132 opposite to the first end surface 1122. The distance between the side of the second boss close to the first boss and the first surface 1132 is L₁, the distance between the side of the first boss close to the second boss and the first end surface 1122 is L₂, and L₁ > L₂, as shown in FIG. 5 which is a cross-sectional view along the line A-A in FIG. 4.

It will be understood that, L₁ - L₂ = ΔL, and ΔL is the maximum assembly tolerance that the pipe connection structure 011 may absorb or compensate for.

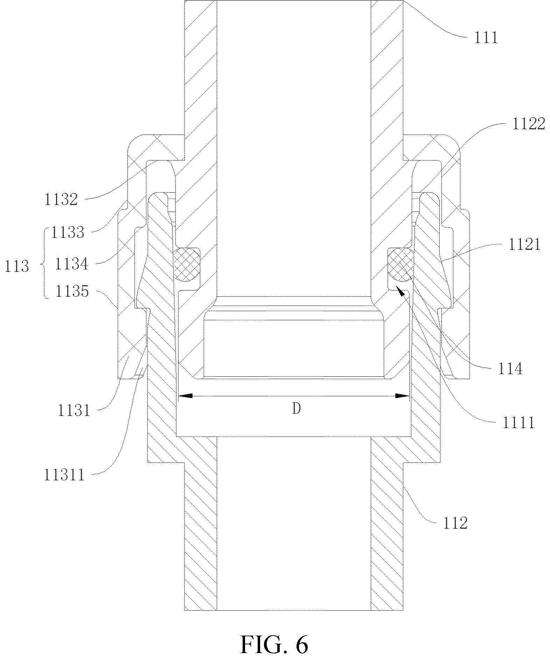

When the first end surface 1122 butts against the first surface 1132, the maximum assembly tolerance is absorbed. At this time, fitting structures of the second pipe joint 112 and the first pipe joint 111 are shown in FIG. 5. When the first boss butts against the second boss, the maximum assembly tolerance is compensated. At this time, fitting structures of the second pipe joint 112 and the first pipe j oint 111 are shown in FIG. 6. FIG. 6 is a schematic structural diagram showing the cooperation between the second pipe joint 112 and the first pipe joint 111 provided in the embodiment of the present application.

For example, the diameter of the portion of the first pipe joint 111 engaging with the second pipe joint 112 is D, and 10%D ≤ △L ≤ 20%D. It will be understood that, ΔL includes but is not limited to 10%D, 12%D, 13%D, 15%D, 17%D, 18%D, and 20%D. For example, in the case where D is 18 mm, ΔL includes but is not limited to 1.8 mm, 2 mm, 2.4 mm, 2.5 mm, 2.7 mm, 3.1 mm, and 3.6 mm.

In the embodiment, by adopting the above arrangement, not only can the second fitting structure 1131 and the first fitting structure 1121 be fitted to block each other, but also neither of the two fitting structures needs to be configured as a groove. Therefore, the structural strength of the pipe connection structure 011 may be enhanced with a certain thickness of the pipe wall, which may ultimately improve the reliability of the pipe connection structure 011.

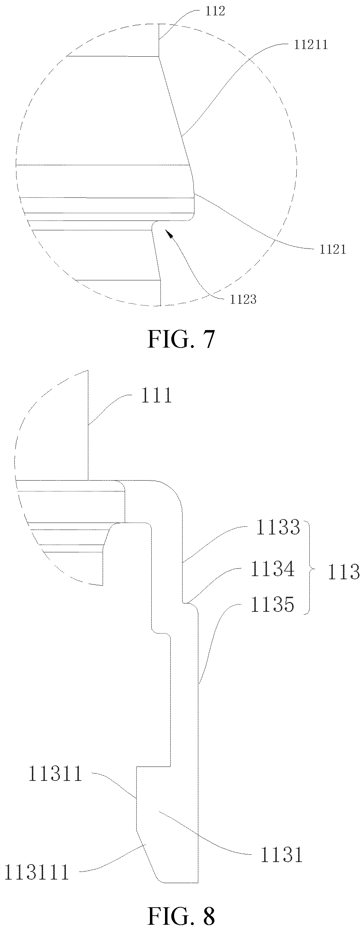

Referring to FIG. 7, FIG. 7 is an enlarged view of the portion B in FIG. 2. In an embodiment, a surface of the first boss facing away from the second pipe joint 112 is a first conical surface 11211. An edge of the first conical surface 11211 with a smaller diameter (referred as the small end of the first conical surface 11211, and the opposite edge with a larger diameter will be referred as the large end below) faces the first end.

It will be understood that, when the first pipe joint 111 and the second pipe joint 112 are connected through insertion, the second boss butts against the first conical surface 11211. As the first pipe joint 111 and the second pipe joint 112 move towards each other, the second boss moves from the small end to the large end of the first conical surface 11211, until the second boss moves to the side of the first boss facing away from the first end surface 1122, and thus the first pipe joint 111 and the second pipe joint 112 are connected through insertion.

In the embodiment where the first conical surface 11211 is provided, when the first pipe joint 111 and the second pipe joint 112 are connected through insertion, the second boss may be guided by the first conical surface 11211, and thus the obstruction of the first boss to the second boss may be reduced. Therefore, the connection efficiency of the first pipe joint 111 and the second pipe joint 112 may be improved.

Referring to FIG. 8, FIG. 8 is a schematic structural diagram showing the connection between the limiting structure 113 and the second boss provided in an embodiment of the present application. In the embodiment, the second boss has a first side wall 11311 facing the outer surface of the second pipe joint 112. A side of the first side wall 11311 away from the first boss is provided with a second conical surface 113111. An edge of the second conical surface 113111 with a smaller diameter (referred as the small end of the second conical surface 113111, and the opposite edge with a larger diameter will be referred as the large end below) faces the first boss.

It will be understood that, when the first pipe joint 111 and the second pipe joint 112 are connected through insertion, the first boss abuts against the second conical surface 113111. As the first pipe joint 111 and the second pipe joint 112 move towards each other, the first boss moves from the large end to the small end of the second conical surface 113111, until the second boss moves to the side of the first boss away from the first end surface 1122, and thus the first pipe joint 111 and the second pipe joint 112 are connected through insertion.

In the embodiment where the second conical surface 113111 is provided, when the first pipe joint 111 and the second pipe joint 112 are connected through insertion, the first boss may be guided by the second conical surface 113111, and thus the obstruction of the second boss to the first boss is reduced. Therefore, the connection efficiency of the first pipe joint 111 and the second pipe joint 112 may be improved.

Referring to FIG. 7, in an embodiment, an avoidance groove 1123 is provided in the outer surface of the second pipe joint 112. The avoidance groove 1123 is arranged adjacent to the first boss and is located at a side of the first boss close to the second boss.

It will be understood that, when the first pipe joint 111 and the second pipe joint 112 are connected through insertion, the second boss abuts against the first conical surface 11211. As the first pipe joint 111 and the second pipe joint 112 move towards each other, the second boss pushes the first boss to deform it towards the avoidance groove 1123, thereby reducing the diameter of the first boss. When the second boss moves to the side of the first boss away from the first end surface 1122, the first boss is restored to its original state to block the second boss.

In the embodiment with the above arrangements, when the first pipe joint 111 and the second pipe joint 112 are connected through insertion, the second boss may push the first boss to deform it towards the avoidance groove 1123, thereby reducing the diameter of the first boss. As a result, the obstruction of the first boss to the second boss may be further reduced, and thus the second boss can move to the side of the first boss away from the first end surface 1122 more smoothly. Therefore, the connection efficiency of the first pipe joint 111 and the second pipe joint 112 may be improved.

Referring to FIG. 2, in an embodiment, the first boss is arranged along a peripheral of the second pipe joint 112.

For example, the first boss is an annular structure protruding from the peripheral of the second pipe joint 112.

In the embodiment with the above arrangement, the first boss may block the second boss along the circumferential direction of the first pipe joint 111 or the second pipe joint 112, which may improve the reliability of the pipe connection structure 011.

As shown in FIG. 8, in an embodiment, in the direction of insertion, the limiting structure 113 includes a first section 1133, a bending portion 1134 and a second section 1135 that are connected in sequence. An end of the first section 1133 away from the bending portion 1134 is connected to the first pipe joint 111, and an end of the second section 1135 away from the bending portion 1134 is connected to the second fitting structure 1131; in a radial direction of the first pipe joint 111, an end of the bending portion 1134 close to the first pipe joint 111 is connected to the first section 1133, and an end of the bending portion 1134 away from the first pipe joint 111 is connected to the second section 1135.

In the embodiment with the above arrangements, when the second boss moves from the small end to the large end of the first conical surface 11211, the pressing force from the first boss to the second boss acts on the bending portion 1134 through the second section 1135, so that the second boss moves radially outward more easily based on the bending portion 1134, thereby further reducing the obstruction between the first boss and the second boss to allow the second boss to move to the side of the first boss away from the first end surface 1122 more smoothly. Therefore, the connection efficiency of the first pipe joint 111 and the second pipe joint 112 may be improved.

In an embodiment, the limiting structure 113 is elastic. For example, the limiting structure 113 is made of plastic. Alternatively, the limiting structure 113 is an elastic metal piece.

For example, when the material of the limiting structure 113 is plastic, the limiting structure 113 may be connected to the first pipe joint 111 with glue or integrally formed with the first pipe. When the limiting structure 113 is the elastic metal piece, the limiting structure 113 may be connected to the first pipe joint 111 with glue or solder, or be integrally formed with the first pipe.

In the embodiment with the above arrangements, when the first pipe joint 111 and the second pipe joint 112 are connected through insertion, in an aspect, the second boss may be more easily moved radially outward based on the elasticity of the limiting structure 113, and the obstruction between the first boss and the second boss may be further reduced, so that the second boss may move to the side of the first boss facing away from the first end surface 1122 more smoothly. Therefore, the connection efficiency of the first pipe joint 111 and the second pipe joint 112 may be improved. In another aspect, after the first pipe joint 111 and the second pipe joint 112 are connected through insertion, the limiting structure 113 is restored to its original state due to its own elasticity, which may avoid damage to the limiting structure 113, thereby improving the connection reliability of the first pipe j oint 111 and the second pipe joint 112.

Referring to FIGS. 5 and 6, in an embodiment, the pipe connection structure 011 further includes a sealing ring 114, and the sealing ring 114 is disposed between the first pipe joint 111 and the second pipe joint 112.

It will be understood that the sealing ring 114 is in a radially compressed state, so that a sealing fit is formed between its inner circumferential surface and the first pipe joint 111, and between its outer circumferential surface and the second pipe joint 112, thereby achieving the sealing connection between the first pipe joint 111 and the second pipe joint 112.

For example, the outer circumferential surface of the first pipe joint 111 is provided with a mounting groove 1111, the sealing ring 114 is arranged in the mounting groove 1111, and a sealing fit is formed between the outer circumferential surface of the sealing ring 114 and an inner circumferential surface of the second pipe joint 112. In addition, the sealing ring 114 is an O-shaped sealing ring 114.

In an embodiment, each of the first pipe joint 111 and the second pipe joint 112 is made of metal.

For example, the first pipe joint 111 and the second pipe joint 112 each include but is not limited to a copper pipe joint, an alloy pipe joint, or a stainless steel pipe joint.

In the embodiment with the above arrangements, the strength of the first pipe joint 111 and the second pipe joint 112 may be improved, and thus the strength of the pipe connection structure 011 is improved, thereby improving the reliability of the relevant pipe assembly using the pipe connection structure 011.

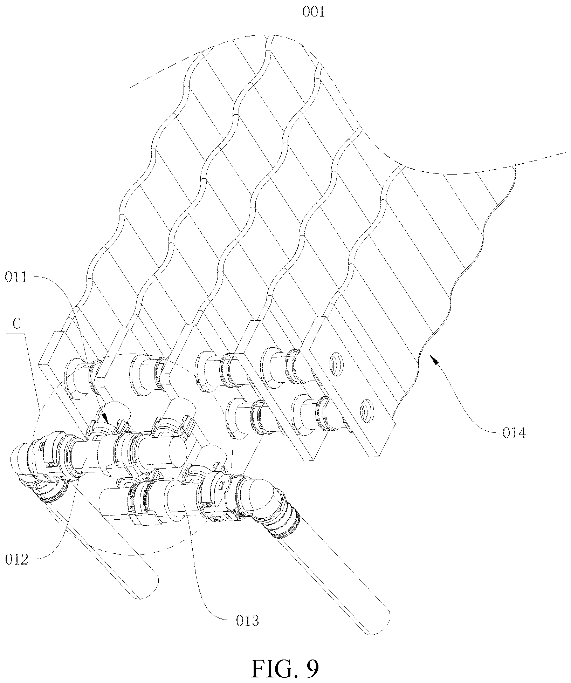

Referring to FIG. 9, FIG. 9 is a schematic structural diagram of a thermal management assembly 001 provided in an embodiment of the present application. Accordingly, the embodiment of the present application provides the thermal management assembly 001, and the thermal management assembly 001 includes a first main pipe 012, a second main pipe 013, a thermal management component 014 and pipe connection structures 011 described above. The thermal management component 014 is provided with one or more flow channels configured for circulation of a heat exchange medium. An inlet and an outlet of each flow channel are a first port 141 and a second port 142, respectively. An end of the first main pipe 012 is in communication with the first port 141 through one of the pipe connection structures 011, and an end of the second main pipe 013 is in communication with the second port 142 through another one of the pipe connection structures 011.

It will be understood that, one of the first main pipe 012 and the second main pipe 013 is a pipe feeding the heat exchange medium into the flow channel, and the other one is a pipe outputting the heat exchange medium from the flow channel. Correspondingly, one of the first port 141 and the second port 142 is a port feeding the heat exchange medium into the flow channel, and the other one is a port outputting the heat exchange medium from the flow channel.

For example, the first main pipe 012 is the pipe feeding the heat exchange medium into the flow channel, and the second main pipe 013 is the pipe outputting the heat exchange medium from the flow channel. Correspondingly, the first port 141 is the port feeding the heat exchange medium into the flow channel, and the second port 142 is the port outputting the heat exchange medium from the flow channel.

In the embodiment with the aforementioned pipe connection structure 011, the fitting clearance between the second fitting structure 1131 and the first fitting structure 1121 may be utilized, so that the first pipe joint 111 and the second pipe joint 112 may be moved towards or away from each other to absorb or compensate for the assembly tolerance of the thermal management assembly 001, thereby reducing the assembly accuracy requirements for the thermal management assembly 001. As a result, the design of the pipe connection of the thermal management assembly 001 is made relatively simple, and the reliability of the thermal management assembly 001 may be improved.

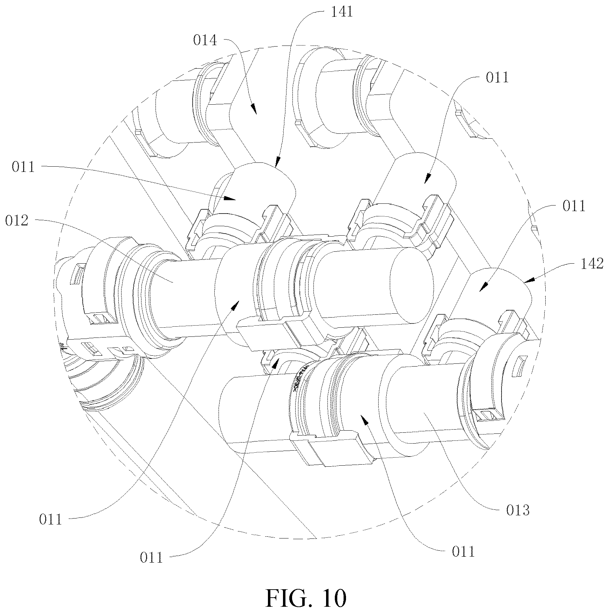

Referring to FIG. 10, FIG. 10 is an enlarged view of the region C in FIG. 9. In an embodiment, the first main pipe 012 has first flow openings, and the first main pipe 012 is in communication with a corresponding first port 141 through one of the first flow openings. There are two first flow openings and two first ports 141, and the two first flow openings are arranged in one-to-one correspondence with the two first ports 141. Specifically, the first main pipe 012 has two first flow openings, and the thermal management component 014 has two first ports 141. One of the first flow openings is in communication with one of the first ports 141, and the other one of the first flow openings is in communication with the other one of the first ports 141.

It will be understood that each of the two first flow openings is in communication with a corresponding first port 141 through one pipe connection structure 011. Correspondingly, the first main pipe 012 is a three-way pipe with three pipe openings, two of the pipe openings are connected to the two first ports 141, respectively, and the third pipe opening is used for liquid inlet.

The embodiment, in which two first flow openings and two first ports 141 are arranged, has the following benefits: in one aspect, the flow uniformity of the heat exchange medium in the thermal management component 014 may be improved, which may ameliorate the problem of local temperature unevenness of the thermal management component 014, thereby improving the heat dissipation effect, and in another aspect, when one of the first flow openings or first ports fails to operate, the other one of the first flow openings or first ports may still operate normally, thereby improving the reliability and stability of the thermal management assembly 001.

Referring to FIG. 10, in an embodiment, the pipe connection structure 011 is connected to the first main pipe 012 at a position between the two first flow openings.

In the embodiment, since the pipe connection structure 011 is arranged between the two first flow openings, there is a fitting clearance between the two first flow openings, so that the clearance may absorb or compensate for the assembly tolerance between the two first ports 141. As a result, the assembly accuracy requirements for the thermal management assembly 001 may be reduced.

Specifically, the axis of the pipe connection structure 011 between the two first flow openings is perpendicular to the axis of the pipe connection structure 011 between the first flow opening and the corresponding first port 141. As a result, the pipe connection structure 011 between the two first flow openings and the pipe connection structure 011 between the first flow opening and the first port 141 absorb or compensate for respective assembly tolerances in two directions, thereby further reducing the assembly accuracy requirements for the thermal management assembly 001.

Correspondingly, the connection manner between the second main pipe 013 and the second port 142 is the same as the connection manner between the first main pipe 012 and the first port 141. Specifically, the second main pipe 013 has second flow openings, and the second main pipe 013 is in communication with a corresponding second port 142 through one of the second flow openings. There are two second flow openings and two second ports 142, and the two second flow openings are arranged in one-to-one correspondence with the two second ports 142. Specifically, the second main pipe 013 has two second flow openings, and the thermal management component 014 has two second ports 142. One of the second flow openings is in communication with one of the second ports 142, and the other one of the second flow openings is in communication with the other one of the second ports 142.

A pipe connection structure 011 is connected to the second main pipe 013 in a position between the two second flow openings. Correspondingly, the second main pipe 013 is a three-way pipe with three pipe openings, two of the pipe openings are connected to two respective second ports 142, and the third pipe opening is used for liquid outlet.

The embodiment, in which two second flow openings and two second ports 142 are arranged, has the following benefits: in one aspect, the flow uniformity of the heat exchange medium in the thermal management component 014 may be improved, which may ameliorate the problem of local temperature unevenness in the thermal management component 014, thereby improving the heat dissipation effect; in another aspect, when one of the second flow openings or second ports 142 fails to operate, the other one of the second flow openings or second ports 142 may still operate normally, thereby improving the reliability and stability of the thermal management assembly 001.

In an embodiment, the thermal management component 014 is provided with a plurality of flow channels. An area of a flow cross-section in each of the plurality of flow channels is an area B. lengths of at least part of the plurality of flow channels are different, and the area B is positively related to a length of a corresponding flow channel.

It will be understood that each flow channel is used for the heat exchange medium to flow therein. The flow cross-section refers to a cross-section defined by each flow channel and perpendicular to the direction where the fluid in the flow channel flows. The smaller the area B of the flow cross-section of the flow channel, the greater the flow resistance of the flow channel to the fluid. In the embodiment, areas of cross-sections of the flow channels with different lengths may be the same or different. When the areas of the cross-sections of the flow channels with different lengths are different, each flow channel may be a constant-radius flow channel, and the area of the cross-section at any position of the flow channel is the area of the flow cross-section. When the areas of the cross-sections of the flow channels with different lengths are the same, the flow channels each are provided with an intercepting portion, and the area of the flow cross-section of the intercepting portion of each flow channel is the area B. When the areas of the cross-sections of the flow channels with different lengths are different, it is necessary to adjust the size of the cross-section of each flow channel according to factors such as the fluid viscosity of the heat exchange medium, the structural shape of the flow channel, the roughness of the flow channel wall, the flow rate, etc., to obtain the required area of the flow cross-section, which requires higher design costs and higher processing and manufacturing costs. When the areas of cross-sections of the flow channels with different lengths are the same, it is only required to adjust the area of the flow cross-section of the intercepting portion of each flow channel according to the above factors, and the remaining portion of the flow channels may be designed and mass-produced, thereby controlling the design cost and processing and manufacturing costs.

The first ports 141 of the plurality of flow channels are used for liquid inlets, and the second ports 142 of the plurality of flow channels are used for liquid outlets. The first ports 141 of the plurality of flow channels are connected in parallel and in communication with the first main pipe, and the second ports 142 of the plurality of flow channels are connected in parallel and in communication with the second main pipe. When the first main pipe 012 has one first flow opening, the first port 141 of one of the flow channels is also in communication with the first flow opening. When the first main pipe 012 has two first flow openings, the first port 141 of one of the plurality of flow channels close to the first main pipe 012 is in communication with a first flow opening, and the first port 141 of another one of the plurality of flow channels close to the first main pipe 012 is in communication with another first flow opening. When the second main pipe 013 has one second flow opening, the second port 142 of one of the flow channels is also in communication with the second flow opening. When the second main pipe 013 has two second flow openings, the second port 142 of one of the plurality of flow channels close to the second main pipe 013 is in communication with a second flow opening, and the second port 142 of another one of the plurality of flow channels close to the second main pipe 013 is in communication with another second flow channel.

Compared with series connection, parallel connection may not only make the flow of heat exchange medium smoother, but also reduce the temperature difference between the first port 141 and the second port 142. As a result, the thermal management effect on battery cells away from the end for liquid inlet is improved.

In addition, when the thermal management component 014 is used in a battery, the thermal management component 014 may be an entire plate provided with the plurality of flow channels. In this case, the thermal management component 014 is mainly placed at an end of the battery module and thermally coupled with end surfaces of the battery cells to perform thermal management of the battery cells. The thermal management component 014 may also include multiple plates each being provided with a single flow channel. In this case, the plates may be placed at an end of the battery module or between rows of battery cells. The plates are thermally coupled with the circumferential surfaces of the battery cells to perform thermal management of the battery cells.

In the embodiment, the area of the flow cross-section of each of the flow channels is arranged to be positively related to the length of the flow channel, and thus the shorter the length of the flow channel, the more the flow resistance. As a result, the flow resistance difference between the flow channels are reduced, and thus the flux uniformity of the flow channels is improved. Therefore, the uniformity of the thermal management effect of the thermal management assembly 001 on the battery cells may be improved.

In an embodiment, each flow channel includes a flow channel body 143 and a intercepting structure 144 disposed in the flow channel body 143. An area of the flow cross-section of the flow channel body 143 is area A, areas A of the plurality of flow channels are equal to each other, an area of a flow cross-section of the intercepting structure 144 is the area B, and area A ≥ area B. Two ends of the flow channel body 143 are the first port 141 and the second port 142.

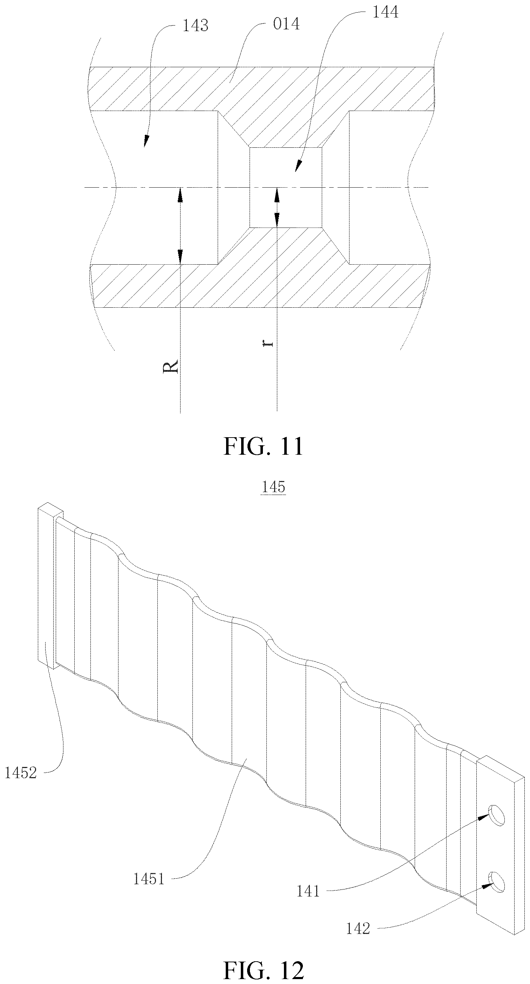

It will be understood that the intercepting structure 144 may be disposed at an end of the flow channel body 143 or at the middle portion of the flow channel body 143, as shown in FIG. 11 which is a partial schematic structural diagram of the flow channel provided in the embodiment of the present application. Considering an example in FIG. 11 in which the cross-section of the flow channel is in the shape of a circle, the radius of the intercepting structure 144 is r, and the area B of the flow cross-section of the intercepting structure 144 is πr² (i.e., area B = πr²); the radius of the flow channel body 143 is R, and the area A of the flow cross-section of the flow channel body 143 is πR² (i.e., area A = πR²). R ≥ r, and thus area A ≥ area B. The smaller the area B of the flow cross-section of the intercepting structure 144 is, the greater the flow resistance of the intercepting structure 144 is to the fluid.

In the embodiment, since the intercepting structure 144 is arranged in each of the flow channels, and the area of the flow cross-section of the intercepting structure 144 is positively related to the length of the flow channel, in a first aspect, the shorter the length of the flow channel, the more the flow resistance, which reduces the flow resistance difference between the flow channels, and thus improves the flux uniformity of the flow channels. In another aspect, it is only required to adjust the area B of the flow cross-section of each intercepting structure 144 to adjust the flow resistance of the corresponding flow channel, the structure of the flow channel body 143 remains unchanged, and the flow channel body 143 may be designed and mass-produced, thereby controlling the design cost and processing and manufacturing costs.

In an embodiment, thermal management component 014 includes a plurality of thermal management plates 145. The plurality of flow channels are arranged in one-to-one correspondence with the plurality of thermal management plates 145.

It will be understood that the thermal management component is applied to the battery module. The battery module includes a plurality of rows of battery cells arranged in sequence. The plurality of thermal management plates 145 are arranged in sequence along the direction in which the rows of battery cells are arranged, and a space is formed between any two adjacent thermal management plates 145 for placing the battery cells in the row. When the battery cells are cylindrical battery cells, the thermal management plate 145 is a serpentine-shaped plate with its surface in contact with the battery cells.

In the embodiment, since the thermal management component 014 is configured as a structure with the plurality of thermal management plates 145, in an aspect, each thermal management plate 145 may be arranged between two adjacent rows of battery cells, which increases the contact surfaces between the thermal management component and the battery cells, thereby improving the thermal management efficiency of the thermal management component 014. Further, this embodiment also utilizes the thermal management plate 145, instead of a battery cell bracket, to support and position the battery cells, which simplifies the components in the battery and the numbers of the components. In another aspect, the thermal management plates 145 may be maintained separately, thereby improving maintenance convenience and reducing maintenance costs.

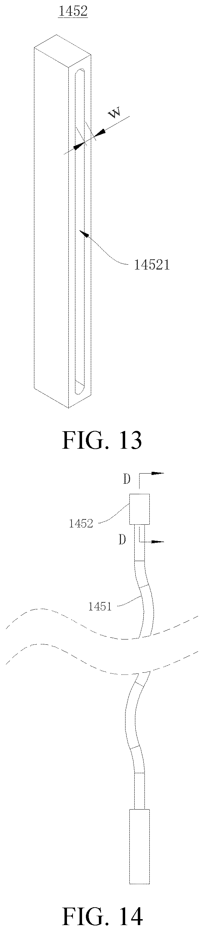

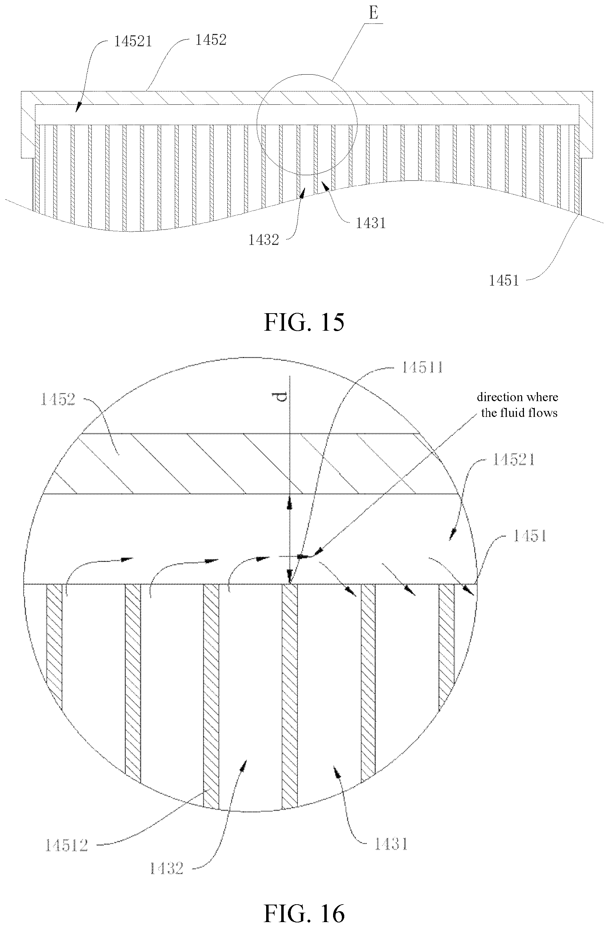

Referring to FIG. 12, FIG. 12 is a schematic structural diagram of the thermal management plate 145 provided in an embodiment of the present application. In the embodiment, the thermal management plate 145 includes a plate body 1451 and a first end plate 1452. The first end plate 1452 is provided with a first slot 14521, as shown in FIG. 13 which is a schematic structural diagram of the first end plate 1452 provided in the embodiment of the present application. The first end of the plate body 1451 is inserted into the first slot 14521, and a sealing connection is formed between the plate body 1451 and the first slot 14521. The flow channel body 143 includes a liquid inlet channel 1431 and a liquid outlet channel 1432. The liquid inlet channel 1431 and the liquid outlet channel 1432 are arranged in parallel in the plate body 1451. An end of the liquid inlet channel 1431 and an end of the liquid outlet channel 1432 are both in communication with the first slot 14521, and the other end of the liquid inlet channel 1431 and the other end of the liquid outlet channel 1432 are the first port 141 and the second port 142, respectively. The first end of the plate body 1451 is provided with an intercepting wall 14511. The intercepting wall 14511 is located between the liquid inlet channel 1431 and the liquid outlet channel 1432. The intercepting wall 14511 and an inner wall of the first slot 14521 together define the intercepting structure 144, as shown in FIGS. 14 and 15, where FIG. 14 is a top view of the thermal management plate 145 provided in the embodiment of the present application, and FIG. 15 is a cross-sectional view along the line D-D in FIG. 14.

It will be understood that, the intercepting wall 14511 and the inner wall of the first slot 14521 together form an annular channel, which defines the intercepting structure 144, and the annular channel is located between the liquid inlet channel 1431 and the liquid outlet channel 1432. The heat exchange medium in the liquid inlet channel 1431 flows through the annular channel and then enters the liquid outlet channel 1432. The size of the annular channel may be adjusted to adjust the area B of the flow cross-section of the intercepting structure 144, and the area B is positively related to the length of the corresponding flow channel. As a result, the flow resistance of each flow channel is adjusted.

For example, both the plate body 1451 and the first end plate 1452 are made of metal with good thermal conductivity, such as aluminum. After the plate body 1451 and the first end plate 1452 are connected through insertion, and a fixed and sealing connection between the plate body 1451 and the first end plate 1452 is formed through soldering.

In the embodiment, the intercepting structure 144 is arranged at one end of the thermal management plate 145, and the intercepting structure 144 is formed by the mutually opposite surfaces between the first end plate 1452 and the plate body 1451. Therefore, in an aspect, it may avoid unnecessary and complex processing, and thus the intercepting structure 144 is simple and easily formed, thereby improving the manufacturing efficiency. In another aspect, the intercepting structure 144 may be adjusted conveniently according to the factors such as the fluid viscosity of the heat exchange medium, the structural shape of the flow channel, the roughness of the flow channel wall, the flow rate, etc., thereby lowering the cost of structural modification of the heat management assembly.

In addition, a plurality of spacing plates 14512 are provided in each of the liquid inlet channel 1431 and the liquid outlet channel 1432, and the spacing plates 14512 are arranged in the direction perpendicular to the direction where the fluid flows. In the liquid inlet channel 1431, the spacing plates 14512 divide the liquid inlet channel 1431 into multiple sub-channels. In the liquid outlet channel 1432, the spacing plates 14512 divide the liquid outlet channel 1432 into multiple sub-channels. In this way, in an aspect, the heat exchange medium is divided into multiple flowing portions, and two adjacent flowing portions do not interfere with each other, which may improve the smoothness of the flow of the heat exchange medium. In another aspect, the strength of the plate body 1451 may be improved, thereby improving the impact resistance of the plate body 1451.

Referring to FIG. 16, FIG. 16 is an enlarged view of the region E in FIG. 15. In an embodiment, a distance d exists between the intercepting wall 14511 and a bottom of the first slot 14521. The distances d in different thermal management plates 145 have positive relation to the lengths of respective flow channels. In FIG. 16, the heat exchange medium flows from the liquid inlet channel 1431 to one side of the first slot 14521, and passes by the intercepting wall 14511 to flow into the other side of the first slot 14521, and then flows into the liquid outlet channel 1432.

It will be understood that, the greater the distance d between the intercepting wall 14511 and the bottom of the first slot 14521, the larger the area B of the flow cross-section of the intercepting structure 144, and the smaller the flow resistance of the intercepting structure 144 to the fluid. The smaller the distance d, the smaller the area B of the flow cross-section of the intercepting structure 144, and the greater the flow resistance of the intercepting structure 144 to the fluid. Therefore, the distance d between the intercepting wall 14511 and the bottom of the first slot 14521 may be adjusted to provide the required area B, and thus the flow resistance of the flow channels of different lengths is adjusted, and finally the consistency of the flow resistance of the flow channels is improved.

The area B of the flow cross-section of the intercepting structure 144 is described below with reference to FIGS. 13 and 16. The intercepting structure 144 is a formed portion enclosed by the intercepting wall 14511, the bottom of the first slot 14521, and a portion of the wall of the first slot 14521 located between the bottom of the first slot 14521 and the intercepting wall 14511. Considering following examples in which the flow cross-section of the intercepting structure 144 is in the shape of a rectangle (that is, the walls on both sides of the first slot 14521 are parallel to each other), the intercepting wall 14511 and the bottom of the first slot 14521 are parallel to each other, and the intercepting wall 14511 is perpendicular to the wall of the first slot 14521. In FIG. 13, the width of the first slot 14521 is w, that is, the dimension of the wide side of the flow cross-section of the intercepting structure 144 is w. In FIG. 16, the distance between the intercepting wall 14511 and the bottom of the first slot 14521 is d, that is, the dimension of the long side of the flow cross-section of the intercepting structure 144 is d. In addition, the long side and the wide side are perpendicular to the direction where the fluid flows at the intercepting wall 14511 (referring to FIG. 13, the direction where the fluid flows at the intercepting wall 14511 is from the left to the right). Therefore, a cross-section corresponding to the long side dimension and the wide side dimension is the flow cross-section of the intercepting structure 144. Correspondingly, the area B of the flow cross-section of the intercepting structure 144 is (w × d), i.e., area B = w × d.

It will be seen from the above that the area B of the flow cross-section is positively related to the distance d, and the area B of the flow cross-section is positively related to the length of the corresponding flow channel. Therefore, the distance d is positively related to the length of the corresponding flow channel. In this way, on the premise that the plate body 1451 is inserted into the first slot 14521 to a certain depth, the depth of the first slot 14521 may be adjusted accordingly for flow channels with different lengths; it is also possible that, on the premise that the first slot 14521 has a certain depth, the distance d may be adjusted by adjusting the depth of the plate body 1451 inserted into the first slot 14521. Therefore, by adjusting the distance d between the intercepting wall 14511 and the bottom of the first slot 14521, the required dimension of the long side of the flow cross-section of the intercepting structure 144 may be obtained, and thus the area of the flow cross-section of the intercepting structure 144 may be adjusted. In this way, the flow resistance of flow channels with different lengths may be adjusted by adjusting the depth of the corresponding plate body 1451 inserted into the first slot 14521, thereby improving the consistency of the flow resistance of each flow channel.

For example, the lengths of the flow channels are L₁, L₂,..., Lₙ from the smallest to the largest. For the flow channel with the length L₁, the distance between the intercepting wall 14511 and the bottom of the first slot 14521 is d₁. For the flow channel with the length L₂, the distance between the intercepting wall 14511 and the bottom of the first slot 14521 is d₂, where d₂ = d₁ + δ₁,..., for the flow channel with the length Lₙ, the distance between the intercepting wall 14511 and the bottom of the first slot 14521 is dₙ, where dₙ = d₁ + δₙ₋₁. The value of δ may be obtained through simulation based on the factors such as the fluid viscosity of the heat exchange medium, the structural shape of the flow channel, the roughness of the flow channel wall, the flow rate, etc.,

In addition, considering an example for explanation, in which the liquid inlet channel 1431 and the liquid outlet channel 1432 are arranged in parallel and have the same length, and the length of the liquid inlet channel 1431 has three optional sizes. The three optional sizes of the length of the liquid inlet channels 1431 are 56 mm, 104 mm and 124 mm. Specifically, in the liquid inlet channel 1431 with the length of 56 mm, d is 0.6 mm. In the liquid inlet channel 1431 with the length of 104 mm, d is 2.6 mm. In the liquid inlet channel 1431 with the length of 124 mm, d is 4.6 mm.

In the embodiment, the area B of the flow cross-section of the intercepting structure 144 is adjusted by adjusting the distance d between the intercepting wall 14511 and the bottom of the first slot 14521, so that the intercepting structure 144 is simple and easily adjusted, and thus it is beneficial to controlling the manufacturing costs of thermal management assembly.

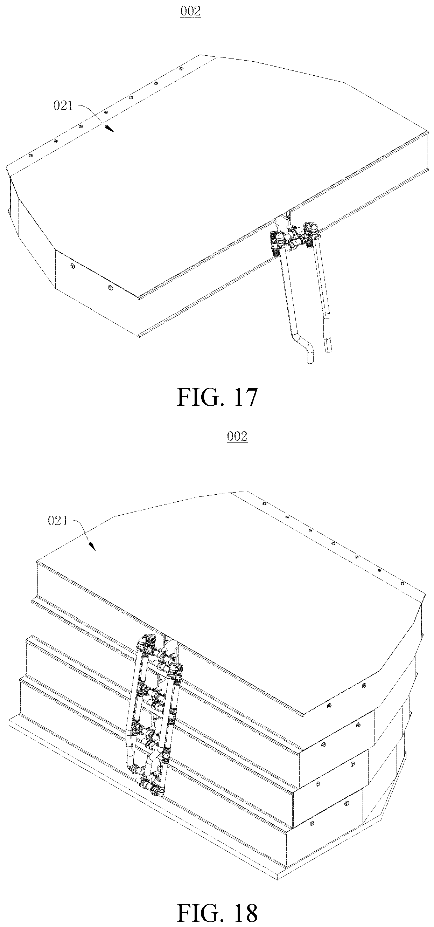

Referring to FIG. 17, FIG. 17 is a schematic structural diagram of a battery pack 002 provided in an embodiment of the present application. Correspondingly, the embodiment of the present application also provides the battery pack 002 including a battery module. The battery module includes a module box 021, battery cells and the thermal management assembly 001 described above. The module box 021 has an installation cavity; there are a plurality of battery cells, and the plurality of battery cells are arranged in the installation cavity; the thermal management component 014 is arranged in the installation cavity, and the thermal management component 014 is thermally coupled to the plurality of battery cells.

In the embodiment with the aforementioned thermal management assembly 001, the fitting clearance between the second fitting structure 1131 and the first fitting structure 1121 may be utilized, so that the first pipe j oint 111 and the second pipe joint 112 may be moved towards or away from each other to absorb or compensate for the assembly tolerance of the thermal management assembly 001, thereby reducing the assembly accuracy requirements for the thermal management assembly 001. As a result, the assembly and reliability of the battery pack 002 may both be improved.

Referring to FIG. 18, FIG. 18 is a schematic structural diagram of another battery pack 002 provided in an embodiment of the present application. In the embodiment, a plurality of battery modules are provided, first main pipes 012 of the plurality of battery modules are connected in parallel, and second main pipes 013 of the plurality of battery modules are connected in parallel. Specifically, the plurality of battery modules are sequentially stacked along a first direction. In the first direction, the first main pipes 012 of the plurality of battery modules are connected in parallel, and the second main pipes 013 of the plurality of battery modules are connected in parallel.

The first direction may be a direction parallel to the axial direction of each battery cell, or may be a direction at an angle with the axial direction of the battery cell. The first direction is specifically designed according to the installation space of the battery pack 002, and is not limited herein.

In addition, the pipes for feeding the heat exchange medium of the thermal management assembly 001 into the flow channels and for outputting the heat exchange medium from the flow channels in each battery module are arranged on the same side of the battery pack 002, so that the pipes of the thermal management assembly 001 in the battery modules may be stacked along the first direction, thereby reducing the size of the battery pack 002.

In the embodiment, the first main pipes 012 of the plurality of battery modules are connected in parallel and the second main pipes 013 of the plurality of battery modules are connected in parallel, so that the respective thermal management assemblies 001 have the heat exchange medium fed and output synchronously. Therefore, not only may the thermal management assemblies 001 have liquid fed fully and uniformly, but also the temperature consistency of the battery modules is improved.

## Claims

1. A pipe connection structure, **characterized in that** the pipe connection structure comprises:
a first pipe joint (111);
a second pipe joint (112) having a first end, wherein the first end and an end of the first pipe joint (111) are connected through insertion, and an outer surface of the second pipe joint (112) is provided with a first fitting structure (1121); and
a limiting structure (113), wherein an end of the limiting structure (113) is connected to an outer surface of the first pipe joint (111), and another end is provided with a second fitting structure (1131);
wherein in a direction of the insertion, the second fitting structure (1131) and the first fitting structure (1121) are fitted to block each other, and the second fitting structure (1131) and the first fitting structure (1121) are fitted with a clearance.

2. The pipe connection structure according to claim 1, **characterized in that** the first fitting structure (1121) is a first boss, the second fitting structure (1131) is a second boss, and the second boss is located at a side of the first boss away from the first end;
the second pipe joint (112) has a first end surface (1122) located at the first end, the limiting structure (113) has a first surface (1132) opposite to the first end surface (1122); a distance between a side of the second boss close to the first boss and the first surface (1132) is L₁, a distance between a side of the first boss close to the second boss and the first end surface (1122) is L₂, and L₁ > L₂.

3. The pipe connection structure according to claim 2, **characterized in that** a surface of the first boss facing away from the second pipe joint (112) is a first conical surface (11211), and a small end of the first conical surface (11211) faces the first end; and/or
the second boss has a first side wall (11311) facing the outer surface of the second pipe joint (112), a side of the first side wall (11311) away from the first boss is provided with a second conical surface (113111), and a small end of the second conical surface (113111) faces the first boss.

4. The pipe connection structure according to claim 2, **characterized in that** an avoidance groove (1123) is provided in the outer surface of the second pipe joint (112), and the avoidance groove (1123) is arranged adjacent to the first boss and located at the side of the first boss close to the second boss; and/or
L₁ - L₂ = △L, a diameter of a portion of the first pipe joint (111) engaging with the second pipe joint (112) is D, and 10%D ≤ △L ≤ 20%D.

5. The pipe connection structure according to claim 2, **characterized in that** the first boss is arranged along a peripheral of the second pipe joint (112); or
the first boss is arranged along the peripheral of the second pipe joint (112), and the first boss is an annular structure protruding from the peripheral the second pipe joint (112).

6. The pipe connection structure according to claim 1, **characterized in that** one of the first fitting structure (1121) and the second fitting structure (1131) is a groove and another is a protrusion, the protrusion is at least partially located in the groove, in the direction of insertion, the protrusion and the groove are fitted to block each other, and the protrusion and the groove are fitted with the clearance.

7. The pipe connection structure according to any one of claims 1 to 6, **characterized in that** in the direction of insertion, the limiting structure (113) comprises a first section (1133), a bending portion (1134), and a second section (1135) connected in sequence, an end of the first section (1133) away from the bending portion (1134) is connected to the first pipe joint (111), and an end of the second section (1135) away from the bending portion (1134) is connected to the second fitting structure (1131); in a radial direction of the first pipe joint (111), an end of the bending portion (1134) close to the first pipe joint (111) and an end of the bending portion (1134) away from the first pipe joint (111) are connected to the first section (1133) and the second section (1135), respectively.

8. A thermal management assembly, **characterized in that** the thermal management assembly comprises:
a first main pipe (012);
a second main pipe (013); and
a thermal management component (014) being provided with one or more flow channels configured for circulation of a heat exchange medium, an inlet and an outlet of each flow channel being a first port (141) and a second port (142), respectively;
wherein the thermal management assembly (001) further comprises a plurality of the pipe connection structures (011) according to any one of claims 1 to 7; and
an end of the first main pipe (012) is in communication with the first port (141) of each flow channel through one of the pipe connection structures (011), and an end of the second main pipe (013) is in communication with the second port (142) of each flow channel through another one of the pipe connection structures (011).

9. The thermal management assembly according to claim 8, **characterized in that** the first main pipe (012) has two first flow openings, a number of the flow channels is two, the two first flow openings and first ports (141) of the two flow channels are arranged in one-to-one correspondence, and the first main pipe (012) is in communication to a corresponding first port (141) through one of the two first flow openings.

10. The thermal management assembly according to claim 9, **characterized in that** one of the pipe connection structures (011) is connected to the first main pipe (012) at a position between the two first flow openings.

11. The thermal management assembly according to claim 8, **characterized in that** the second main pipe (013) has two second flow openings, a number of the flow channels is two, the two second flow openings and second ports (142) of the two flow channels are arranged in one-to-one correspondence, and the second main pipe (013) is in communication with a corresponding second port (142) through one of the two second flow openings; or
the second main pipe (013) has two second flow openings, the number of the flow channels is two, the two second flow openings and the second ports (142) of the two flow channels are arranged in one-to-one correspondence, the second main pipe (013) is in communication with the corresponding second port (142) through one of the two second flow openings, and one of the pipe connection structures (011) is connected to the second main pipe (013) at a position between the two second flow openings.

12. The thermal management assembly according to claim 8, **characterized in that** the thermal management component (014) is provided with a plurality of flow channels, an area of a flow cross-section of each flow channel is area B, lengths of at least part of the plurality of flow channels are different, and the area B is positively related to the length of a corresponding one of the plurality of flow channels; or
the thermal management component (014) is provided with the plurality of flow channels, the area of the flow cross-section of each flow channel is area B, the lengths of at least part of the plurality of flow channels are different, and the area B is positively related to the length of the corresponding one of the plurality of flow channels; each flow channel comprises a flow channel body (143) and a intercepting structure (144) disposed in the flow channel body (143), an area of a flow cross-section of the flow channel body (143) is area A, areas A of the plurality of flow channels are equal to each other, an area of a flow cross-section of the intercepting structure (144) is the area B, and area A ≥ area B; two ends of the flow channel body (143) are the first port (141) and the second port (142).

13. The thermal management assembly of claim 12, **characterized in that** the thermal management component (014) comprises a plurality of thermal management plates (145), the plurality of flow channels and the plurality of thermal management plates (145) are arranged in one-to-one correspondence.

14. The thermal management assembly according to claim 13, **characterized in that** the thermal management plates (145) each comprise a plate body (1451) and a first end plate (1452), the first end plate (1452) is provided with a first slot (14521), a first end of the plate body (1451) is inserted into the first slot (14521), and a sealing connection is formed between the plate body (1451) and the first slot (14521); in a case where each flow channel comprises the flow channel body (143) and the intercepting structure (144), the flow channel body (143) comprises a liquid inlet channel (1431) and a liquid outlet channel (1432), the liquid inlet channel (1431) and the liquid outlet channel (1432) are arranged in parallel in the plate body (1451), an end of the liquid inlet channel (1431) and an end of the liquid outlet channel (1432) are both in communication with the first slot (14521), and another end of the liquid inlet channel (1431) and another end of the liquid outlet channel (1432) are the first port (141) and the second port (142), respectively; the first end of the plate body (1451) is provided with an intercepting wall (14511), the intercepting wall (14511) is located between the liquid inlet channel (1431) and the liquid outlet channel (1432), and the intercepting wall (14511) and an inner wall of the first slot (14521) together define the intercepting structure (144).

15. A battery pack, **characterized in that** the battery pack comprises one or more battery modules each comprising:
a module box (021) having an installation cavity;
a plurality of battery cells arranged in the installation cavity; and
the thermal management assembly (001) according to any one of claims 8 to 14, the thermal management component (014) is arranged in the installation cavity and thermally coupled to the plurality of battery cells.
